# EUROPEAN PATENT APPLICATION

(11) **EP 3 754 994 A1**
(43) Date of publication of application: **23.12.2020**
(21) Application number: 19180503.5
(22) Date of filing: 17.06.2019
(51) Int. Cl.: H04N 21/2362

(54) **SYSTEM AND METHOD FOR ELECTRONIC PROGRAM GUIDE DATA DELIVERY**

(71) Applicant: Advanced Digital Broadcast S.A., 1293 Bellevue (CH)
(72) Inventor: POLAK, Michal, 65-119 Zielona Gora (PL)
(74) Representative: Blonski, Pawel

(57) **Abstract**

The present invention relates to a system and method for electronic program guide data delivery. In particular, the present invention relates to completeness and decreased time of delivery of events information data required to present an electronic program guide. It enables to retrieve EPG events from a single source for a plurality of services managed by various operators or content providers. This lets avoid merging events (with possible conflict resolutions) which would be retrieved, for example, from EIT sections broadcast on various transport streams controlled by these aforementioned operators.

## Description

### TECHNICAL FIELD

The present invention relates to a system and method for electronic program guide data delivery. In particular, the present invention relates to completeness and decreased time of delivery of events information data required to present an electronic program guide.

### BACKGROUND OF THE INVENTION

Prior art defines a broadcast-enabled Set-Top-Box (STB), which is a digital television receiver typically capable of displaying an Electronic Program Guide (EPG) by means of a Graphical User Interface (GUI).

The EPG information is retrieved, for example, from Event Information Tables (EIT) or private (proprietary as per MPEG-2 Part 1: Systems) sections by means of one or more of satellite/cable/terrestrial tuners. The collected data sections are processed, i.e. parsed to a set EPG events associated with metadata such as a service (channel) a given event belongs to, its start time, duration, title, description, optional parental rating information and the like.

In some applications, the EPG information may be retrieved on-the-fly, for example the present and following events of the service being presented currently to display them in the GUI's information banner, while other applications may attempt to collect as many events as possible with respect to limitation of hardware resources such as available memory (volatile, non-volatile) or tuners, which may be tuned to one or more transport streams with EPG data at the same time. In the latter case, the collected information is typically displayed by the GUI using an EPG grid/list display screen.

EPG information, broadcast by means of EIT sections, includes data for a subset of all services that an STB may present. For example, a given transport streams may contain only EIT-actual sections, what entails that EIT-based EPG information is available only for services signaled in a Program Allocation Table (PAT as defined by the ISO/IEC 13818-1 (MPEG-2 Part 1: Systems)) in that transport stream.

In some cases, it may happen that there are not any EIT-actual sections broadcast at all, therefore the EPG information will have to be collected from EIT sections broadcast in another transport stream. Furthermore, even if EIT-other sections (such sections refer to EPG information of services not signaled in the given transport stream's PAT) are broadcast in a transport stream, they typically refer to a limited number of services.

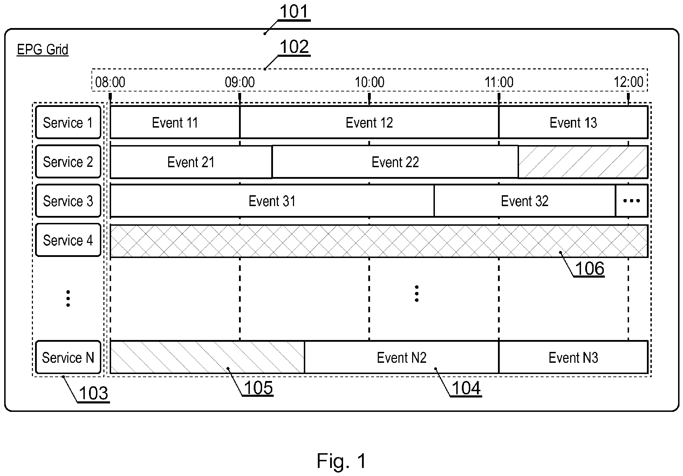

The above entails that the user will have to zap over available services in order to tune to a variety of transport streams and remain tuned to a given transport stream for few minutes, so as to retrieve as many EIT sections for as many as possible services so that the EPG doesn't display numerous empty cells/rows in an EPG grid or list. An example of an EPG grid 101 with said empty cells/rows is shown in Fig. 1.

The EPG grid comprises a list of available services 103 with events or empty cells/ rows ordered by time 102. When event information is available, it is displayed 104, otherwise an empty cell 105 or an empty row 106 is shown. Since various transport streams may contain EIT sections with different EPG information for the same pair of [a service, an EPG event], it may lead to a situation where EPG events even for the same service have been collected from various transport streams with some differences in events' titles or descriptions. This leads to wasting resources, for transmitting, reception and local processing of such redundant information.

Furthermore, EIT sections are broadcast at a fixed bitrate, depending on the delivery system: satellite / cable / terrestrial. There are defined recommended or minimum repetition times (in seconds) for present/following and schedule EIT sections with respect to the actual and other ones for a given delivery system (ETSI TS 101 211). This means that the time needed for collecting events for the 7th day (for example) since now may be the same as for tomorrow's events, while it is more likely that a user typically looks at EPG information being closer to the current time.

It may also happen that there is a plurality of services with the same content but of various quality, for example of standard definition (SD), high definition (HD) or 4K resolutions. For such services, it is reasonable to broadcast a single instance of EPG information, which it is not feasible with EIT sections.

In some systems private (proprietary) EPG sections may be applied. However, typically these private EPG sections do not allow to include EPG information (EPG events) for the past time, which is desirable for such STB features as a catch-up TV, a personal video recording (PVR) or a network PVR.

Particularly, this concerns systems with an EPG head-end not having a network (IP) interface. Thanks to collecting past, present and future events from a single source, there is not any need to merge events from different sources, often exposing data in various formats (for example, a binary-based format of descriptors applied in broadcast sections and a text-based format used in files retrieved from a different head-end). Thus that there is a need to provide a simpler STB's EPG module, which at the same time is more easily manageable.

Furthermore, typical private EPG sections are broadcast at fixed bitrate, meaning that data (preferably all sections or containing EPG information for a number of days since today) should be caught in a single loop iteration (transmission loop also referred to as a transmission carousel). This may lead to a situation where such EPG data as parental rating information is not available yet, although a service's components (audio, video, subtitles, ...) are being played or their presentation could be started although the service's present (current) event is not entitled for the audience with the STB's current parental rating settings.

Also, private EPG sections may be of different types, e.g. containing a services list in one type and EPG events in another type, which means that the section(s) with the services list must be received and processed prior the sections with EPG events. Again, this may disadvantageously slow down retrieval of EPG events.

Furthermore, private EPG sections, similarly like EIT, may include private descriptors and binary formatted data, meaning that such EPG data needs to be converted to a textual form for further processing by higher software layers, including applications executed within a web browser's environment.

Therefore, it would be advantageous to provide a system and methods allowing to overcome the aforementioned drawbacks.

### SUMMARY AND OBJECTS OF THE PRESENT INVENTION

An object of the present invention is a method for electronic program guide data delivery in a broadcast only system, the method comprising: creating one or more private descriptors in a Network Information Table (NIT), according to Program-specific information metadata as defined by ISO/IEC 13818-1, said one or more private descriptors collectively comprising:
∘ a descriptor_tag, which identifies the descriptor;
∘ a descriptor_length specifying the total number of bytes occupied by the descriptor;
∘ an epg_version_number field;
∘ a tid_ext_service_number_mask specifying, which bits of the private EPG section's table_id_extension field comprise a service number;
∘ a tid_ext_direction_mask specifying, which bit of a private EPG section's table_id_extension field comprises a direction of days;
∘ a tid_ext_day_offset_mask specifying which bits of a private EPG section's table_id_extension field comprise a day offset allowing for addressing sections for a given day being in the past, today or future;
∘ a tid_ext_day_range_mask specifying, which bits of a private EPG section's table_id_extension field comprise a day range indicating for which part of a single day the section refers to;
∘ a language_sections_count specifying a maximum number of private EPG sections within the same value of the table_id_extension field for a given language;
∘ a languages_count specifying a number of languages, for which the private EPG data is broadcast;
∘ a services_count specifying the number of services for which private EPG sections are broadcast;
∘ a transports_count specifying a number of transport streams, in which private EPG sections are available;

- creating a plurality of EPG data sections, extending sections according to the EN 300 468, each section comprising:
   ∘ a table_id_extension specifying the service number, the day offset and optionally a day's range as specified by the private descriptor's mask fields:
      ▪ tid_ext_service_number_mask;
      ▪ tid_ext_direction_mask'
      ▪ tid_ext_day_offset_mask and
      ▪ tid_ext_day_range_mask;
   ∘ a language_last_section_number specifying the last section number for the language within the section;
   ∘ a current_date field indicating the current date;
   ∘ compressed_data comprising bytes of data to be transmitted;
- for each channel, broadcasting said private descriptor and corresponding private EPG sections carrying EPG-related data for receivers.

Preferably, the private descriptor further comprises a field of ISO_639_language_code identifying the language of the private EPG data.

Preferably, the private descriptor further comprises a service_number, only if services_count is greater than zero, specifying the number of a service, for which private EPG sections are broadcast.

Preferably, the private descriptor further comprises a duplicated_services_count, only if services_count is greater than zero, specifying a number of duplicated services in context of the private EPG data for a service with a given number.

Preferably, the private descriptor further comprises a duplicated_service_number, only if duplicated_services_count is greater than zero, specifying the number of a duplicated service, for which private EPG sections are the same as for the "main" service referred by the service_number field.

Preferably, wherein the private descriptor further comprises, only if transports_count is greater than zero:
∘ an onid specifying an Original Network Id;
∘ a tsid specifying a Transport Stream Id;
∘ a pid specifying a transport stream's Packet Identifier.

Preferably, the EPG data sections are broadcast at dynamic bitrate, different for particular days or time ranges said data refer to.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for electronic program guide data delivery. Further details and features of the present invention, its nature and various advantages will become more apparent from the following detailed description of the preferred embodiments shown in a drawing, in which:
Fig. 1 presents a view of a prior art EPG;
Fig. 2 presents a system comprising a head-end broadcasting proprietary EPG data through a variety of channels to STBs;
Fig. 3 shows a structure of the NIT proprietary configuration description;
Fig. 4 shows a structure of a section with private EPG data; and
Figs. 5A-5D show a method for retrieving a section with proprietary EPG data for a given service, day and language.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

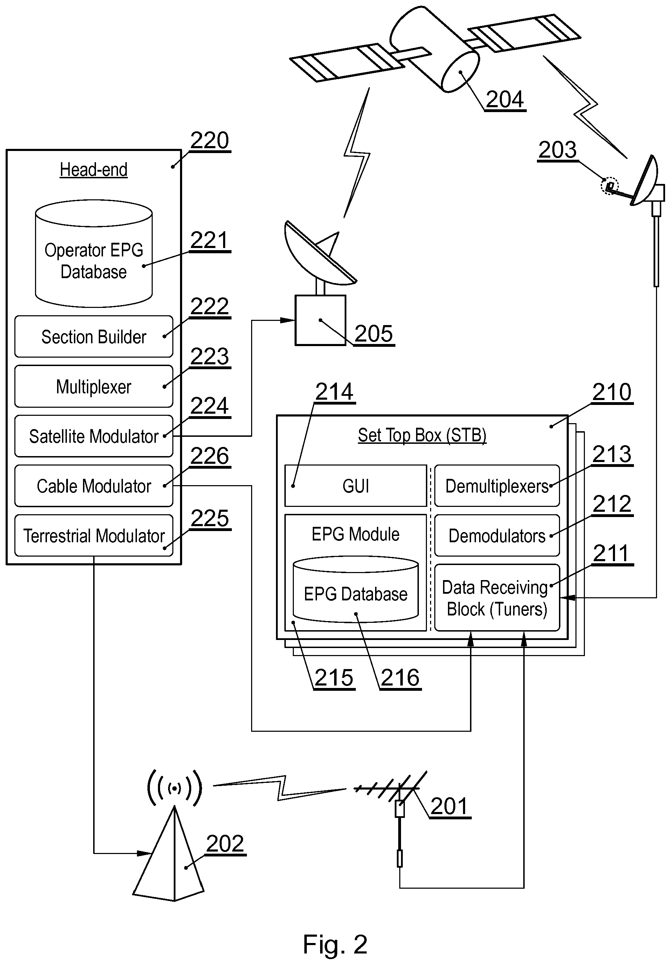

The present invention relates to EPG information delivery by means of a unidirectional broadcast channel as shown in Fig. 2. The EPG data is typically prepared on daily basis and provided by an EPG head-end 220 to a population of STBs 210 through one or more unidirectional broadcast channels such as a satellite, cable or terrestrial system.

The EPG head-end 220 comprises an EPG database 221 managed by an operator. The EPG database 221 is converted to a set of private EPG sections 400 by a Section Builder 222 and joined with other Program-specific information/Service Information (PSI/SI) data and elementary streams by a Multiplexer 223.Then, depending on the delivery system, an appropriate modulator(s) is/are used 224, 225, 226. In case of the satellite channel, data are sent through the satellite uplink antenna 205 to a satellite 204 and then received a downlink satellite dish/low-noise block (LNB) 203. Similarly, for a terrestrial broadcasting data are provided by means of a transmitting antenna 202 and received by a receiving antenna 201. In case of a cable delivery, for example, a coaxial cable is used for said unidirectional data transmission.

Regardless of the delivery system applied, the transmitted data are eventually received by the STB 210 by means of one of the tuners 211. Next, demodulators 212 and demultiplexers 213 are used to obtain individual EPG sections, so that they may be processed by the EPG module 215 and the GUI 214. The EPG module may store EPG events in a local EPG database 216.

The EPG information is provided, according to the present invention, by proprietary sections. Preferably, only one proprietary table type for instant retrieval is defined. This means that there is not any need to catch sections of possibly other types, for example comprising a services list.

Preferably, a list of the transport stream(s) where the private EPG sections 400 are broadcast is signaled by means of a private descriptor 300 in a Network Information Table (NIT). Because the NIT section(s) are broadcast along with the EPG ones, i.e. in the same transport stream(s), it is enough to catch the NIT table once to obtain information on where the private EPG sections are broadcast

However, a NIT with the private descriptor 300 in a transport stream where the proprietary EPG sections are not available is also possible. The transport streams with the private EPG sections are preferably identified within the aforementioned private description in a NIT by a triplet comprising of the ONID.TSID.PID, where ONID is the Original Network Id, TSID is the Transport Stream Id and the PID is the transport stream Packet Identifier. Both the ONID and TSID unambiguously identify a transport stream, while the PID specifies the packet identifier of the transport stream packets containing the private EPG sections.

Furthermore, the private descriptor 300 in a NIT includes also information how to interpret the table_id_extension field found in the private EPG section 400, i.e.: the service numbers, how many days in the past/future, an optional day range, available languages mapped to sections' numbers. The table_id_extension field may be used by the STB's demultiplexers 213 for hardware filtering of private EPG sections according to the tid_ext_* fields.

Preferably, bitrate of the EPG sections varies depending on the day the data in sections refer to. For example, sections for today may be repeated most frequently i.e. every 2 seconds, for yesterday and tomorrow every 10 seconds, and for all remaining available days - every 30 seconds. Because of relative high bitrate of sections for the current day, the problem with a lack of parental rating information may be mitigated.

Preferably, the information in the private EPG sections 400 is always compressed (e.g. using LZMA, LZ77, Huffman coding and their variations), which virtually increases bitrate of these sections.

Preferably, information for services with the same content but of different quality is broadcast only once. This is achieved by specifying in the NIT's private descriptor 300 a list of service numbers for which the private EPG 400 information is available along with a possible list of service numbers that share the same EPG information.

Preferably, the STB's EPG module may cache (fully or partially) the originally compressed sections in a non-volatile or volatile memory, so that the EPG data would not occupy a significant amount of memory, yet the data may be accessed without using scarce resources like tuners, demodulators or demultiplexers.

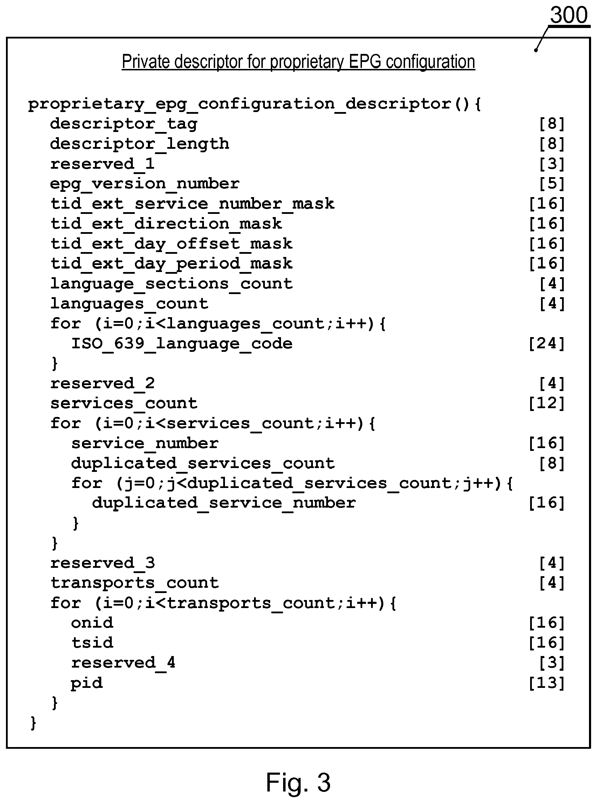

Preferably, the private EPG sections 400 comprise text data in a JavaScript Object Notation (JSON) format for easy parsing, processing and extending with state-of-the-art technologies. However, the standard binary descriptor-based approach is also possible.
- Prior to collecting the private EPG sections 400, the NIT comprising the private descriptor 300 with EPG configuration must be retrieved. In Fig. 3 there are shown examples of private descriptor's 300 fields wherein their meanings are as follows (in its implementations, for example their size may be selected to suit particular needs):
- **descriptor_tag** (required): An 8-bit value which identifies this descriptor; because this is non-standard descriptor, its value must be in range of 0x80 and 0xFE, for example 0xA0. The range follows the ETSI EN 300 468 for "user defined" tag values;
- **descriptor_length** (required): An 8-bit value specifying the total number of bytes occupied by the descriptor following the next field;
- **reserved_1** (optional): A 3 bit value always equal to 0; a field typically used in order to structure a larger data entity, delimits groups of fields or provides stuffing bytes that make given sections equal for example to full bytes;
- **epg_version_number** (required): A 5 bit value equal to the version of the private EPG sections (the *version_number* field) this configuration refers to. This private configuration descriptor in the NIT must be updated prior updating the private EPG sections 400 to a new version. The STB's EPG module will not retrieve the private EPG sections if these versions do not match. All transport streams with private EPG sections 400 comprise also a NIT with this descriptor;
- **tid_ext_service_number_mask** (required): A 16-bit value specifying, which bits of the private EPG section's *table_id_extension* field comprise the service number. For example, 0xFFC0 means that the bits 15 to 6, i.e. the 10 most significant bits (MSB) include the service number;
- **tid_ext_direction_mask** (required): A 16-bit value specifying, which bit of the private EPG section's *table_id_extension* field comprises a direction of the days (in the past or the current day and future ones). For example, 0x0020 means that the bit 5 specifies the direction, i.e. 0 - past, 1 today and future. If this mask is equal to zero, no sections referring to the past are broadcast;
- **tid_ext_day_offset_mask** (required): A 16-bit value specifying which bits of the private EPG section's *table_id_extension* field comprise a day offset. If the value of the *tid_ext_direction_mask* field is non-zero, it is taken into account referring to a day offset. The day offset allows for addressing sections for a given day being in the past, today or future. For example, 0x001F means that the bits 4..0 include the day offset from the current day and together with the *tid_ext_direction_mask* field the following ranges are available:
   ∘ 000000b..011111b (0x00..0x1F): 31 days in the past;
   ∘ 100000b (0x20): today (1 day);
   ∘ 100001b..111111b: (0x21..0x3f) 30 days in the future;
- **tid_ext_day_range_mask** (required): A 16-bit value specifying, which bits of the private EPG section's *table_id_extension* field comprise a day range. Thanks to this field, it is possible to indicate for which part of a single day the section refers to. Depending on the size of the mask it may be the first and second half of a day [0h, 12g), [12h, 0h) or four quarters of a day [0h, 6h), [6h, 12h), [12h, 18h), [18h, 0h). For example, 0x0003 means that the bits 1..0 include the day range. If this mask is equal to zero, the day range is not used, i.e. a given section includes EPG events for the entire day of a service. In an embodiment a part of configuration with a non-zero day range mask may include:
   ∘ bits 15..7 (9 bits, 0xFF80): *tid_ext_service_number_mask* (a service number is in range between 0 and 511)
   ∘ bit 6 (1 bit, 0x0040): *tid_ext_direction_mask*
   ∘ bits: 5..2 (4 bits, 0x003C): *tid_ext_day_offset_mask*
   ∘ bits 1..0 (2 bits, 0x0003): *tid_ext_day_range_mask*, i.e. 00b - [0h, 6h), 01b [6, 12h), 10b [12h, 18h), 11b [18h, 0h)
   ∘ In another embodiment where the *tid_ext_day_range_mask's* value is equal to zero, a part of configuration may have the following values:
   ∘ bits 15..6 (10 bits, 0xFFC0): *tid_ext_service_number_mask* (a service number is in range between 0 and 1023)
   ∘ bit 5 (1 bit, 0x0020): *tid_ext_direction_mask*
   ∘ bits 4..0 (5 bits, 0x001F): *tid_ext_day_offset_mask*
   ∘ *tid_ext_day_range_mask* equal to 0x0000
   ∘ It is worth noting, that a binary AND operation (denoted by &) on all these 4 mask fields is always equal to zero, i.e.: *tid_ext_service_number_mask*
- & *tid_ext_direction_mask* & *tid_ext_day_offset_mask*
- & *tid_ext_day_range_mask* = 0.
- **language_sections_count** (required): A 4-bit value specifying a maximum number of private EPG sections 400 within the same value of the *table_id_extension* field for a given language. In an embodiment, the maximum number of sections for a given language within the same value of the *table_id_extension* field may be equal to 8. This entails that sections 0..7 comprise private EPG information for the language A, sections 8..15 for the language B and so on;
- **languages_count** (required): A 4-bit value specifying the number of languages for which the private EPG data is broadcast. The minimum value of this field is equal to 1;
- **ISO_639_language_code** (required): A 24-bit value identifying the language of the private EPG data 400. The value is preferably encoded as specified in ETSI EN 300 468 (Digital Video Broadcasting; Specification for Service Information in DVB systems) for standard descriptors, e.g. in the extended event descriptor. This field occurs as many times as the value of the *languages_count* field does. A given occurrence refers to private EPG sections 400 with section numbers computed as below:
   ∘ let I be the index of the *ISO_639_language_code* field - in range of [0, *languages_count* -1]
   ∘ section numbers for the language at the index I are in range of: [I * *language_sections_count,* (I+1) * *language_sections_count* - 1]
   ∘ for example: *languages_count* = 2, *language_sections_count* = 8, the section numbers range is for I = 0: [0, 7], for I = 1: [8, 15].
- **reserved_2** (optional): A 4 bit value always equal to 0; see reserved_1 for more details;
- **services_count** (required): A 12-bit value specifying the number of services for which private EPG sections are broadcast. It is worth noting that if this field's value is equal to zero, EPG data are not available at all;
- **service_number** (optional, availably only if services_count is greater than zero): A 16-bit value specifying the number of a service, for which private EPG sections 400 are broadcast. This field occurs *services_count* times along with optional further fields comprising duplicated services for a given service. The *service_number* fields let the EPG module 215 attempt to collect the private EPG data only for these services, for which the data is broadcast. Service numbers are placed in ascending order;
- **duplicated_services_count** (optional, availably only if services_count is greater than zero): An 8-bit value specifying a number of duplicated services in context of the private EPG data 400 for a service with a given number. A duplicated service refers to the same EPG data as the "main" service addressed by the *service_number* field. A typical difference between a duplicated service(s) and the "main" service is quality of the video component, for example SD, HD or 4K, while the actual content remains the same. Duplicated service numbers are preferably placed in an ascending order;
- **duplicated_service_number** (optional, available only if duplicated_services_count is greater than zero): A 16-bit value specifying the number of a duplicated service, for which private EPG sections 400 are the same as for the "main" service referred by the *service_number* field. The *duplicated_service_number* field occurs *duplicated_services_count* times, for each duplicated service's number;
- **reserved_3** (optional): A 4 bit value always equal to 0; see reserved_1 for more details;
- **transports_count** (required): A 4-bit value specifying a number of transport streams, in which private EPG sections 400 are available. For each transport stream a triplet of ONID, TSID, PID is specified - these fields below occurs *transports_count* times. As already mentioned, transport streams with private EPG sections 400 comprise also a NIT with this private configuration descriptor; It is worth noting that if this field's value is equal to zero, a receiver will not be able to determine in which transport stream(s) private EPG sections 400 are broadcast;
- **onid** (optional, available only if transports_count is greater than zero): A 16-bit value specifying the Original Network Id;
- **tsid** (optional, available only if transports_count is greater than zero): A 16-bit value specifying the Transport Stream Id;
- **reserved_4** (optional, available only if transports_count is greater than zero): A 3 bit value always equal to 0; see reserved_1 for more details;
- **pid** (optional, available only if transports_count is greater than zero): A 13-bit value specifying the transport stream Packet Identifier.

It is worth noting that in a NIT table the private descriptor 300 is preferably followed by a private_data_specifier_descriptor as specified in the ETSI EN 300 468.

The private descriptor 300 may occur more than once in a NIT table to accommodate all configuration data. In such a case information specified by individual loops within the private descriptors are joined. In another embodiment a plurality of private descriptors may be introduced, which collectively comprise the fields presented in Fig. 3. For example:
- a private descriptor for proprietary EPG base configuration having these fields:
   ∘ *epg_version_number*,
   ∘ *tid_ext_service_number_mask*,
   ∘ *tid_ext_direction_mask*,
   ∘ *tid_ext_day_offset_mask*,
   ∘ *tid_ext_day_period_mask*,
   ∘ *language_sections_count*,
- a private descriptor for proprietary EPG language configuration having these fields:
   ∘ *languages_count*,
   ∘ *ISO_639_language_code*,
- a private descriptor for proprietary EPG service configuration comprising:
   ∘ *services_count*,
   ∘ *service_number* (zero or more instances),
   ∘ *duplicated_services_count*,
   ∘ *duplicated_service_number* (zero or more instances),
- a private descriptor for proprietary EPG transport configuration comprising:
   ∘ *transports_count*,
   ∘ [*onid*, *tsid*, *pid*] triplet (zero or more instances).

A section comprising private EPG data 400 for a given service and a day (or a day's range) and texts in a selected language is straightforward addressable by means of the section's *table_id_extension* field. It is worth noting that unlike as in EIT sections, the private EPG sections 400 comprise texts in only one language, meaning that a receiving STB does not collect nor process sections comprising text information in languages that are not needed.

Furthermore, the private EPG sections 400 enable broadcasting also events referring to days in the past. Thanks to this feature, the STB's EPG module may retrieve events only from a single source and hence avoid merging events provided by different EPG broadcast head-ends. Also, such events may have different metadata (data models), meaning that depending on the source only some metadata may be available.

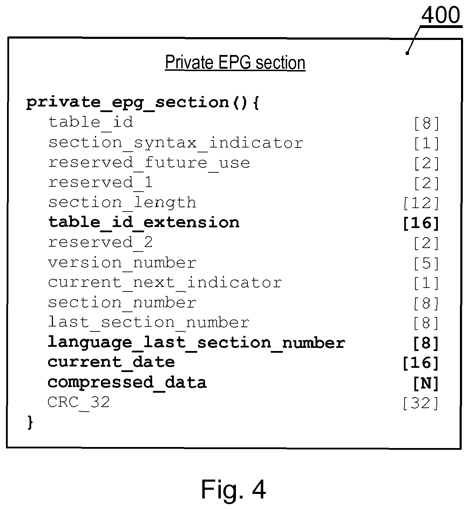

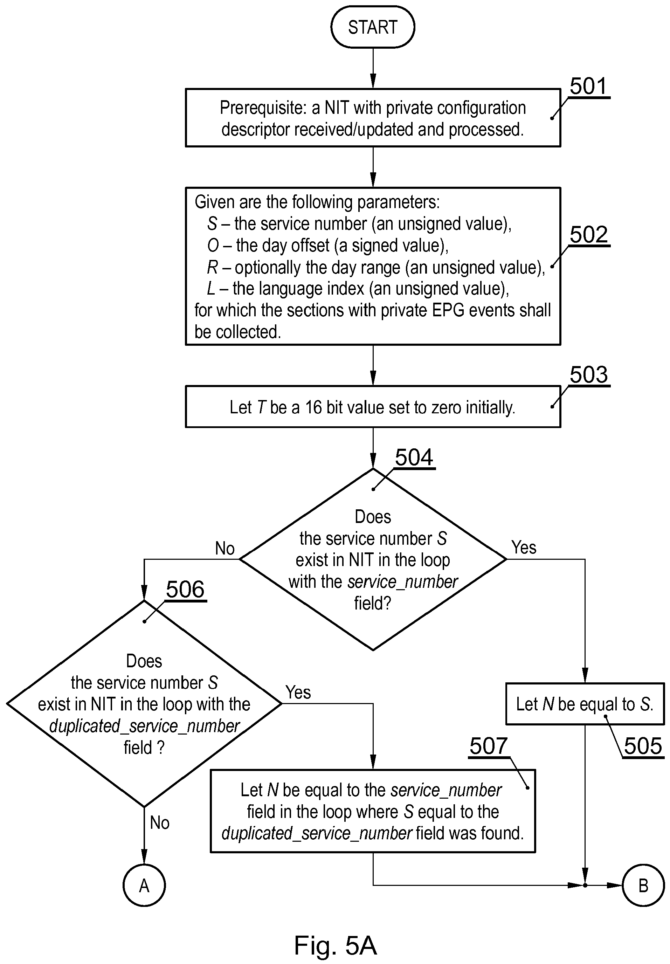

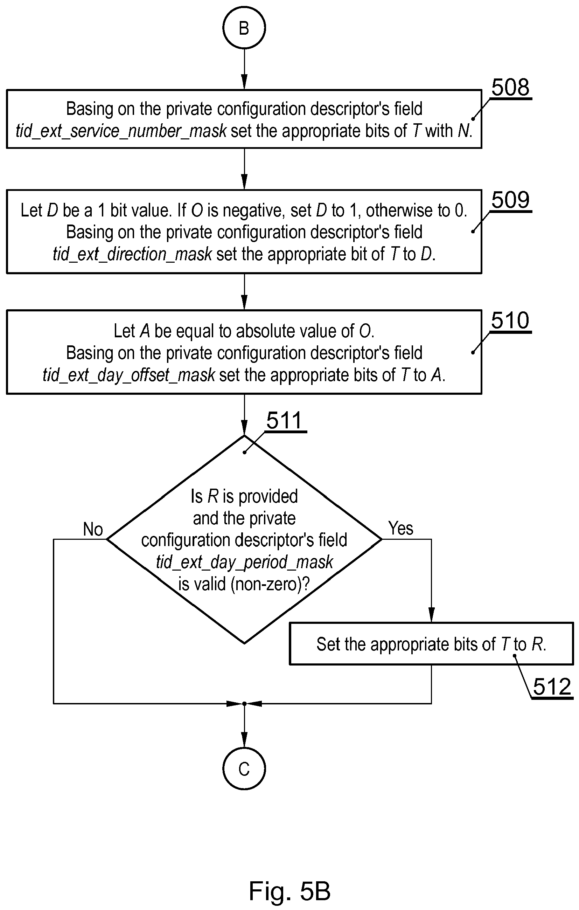

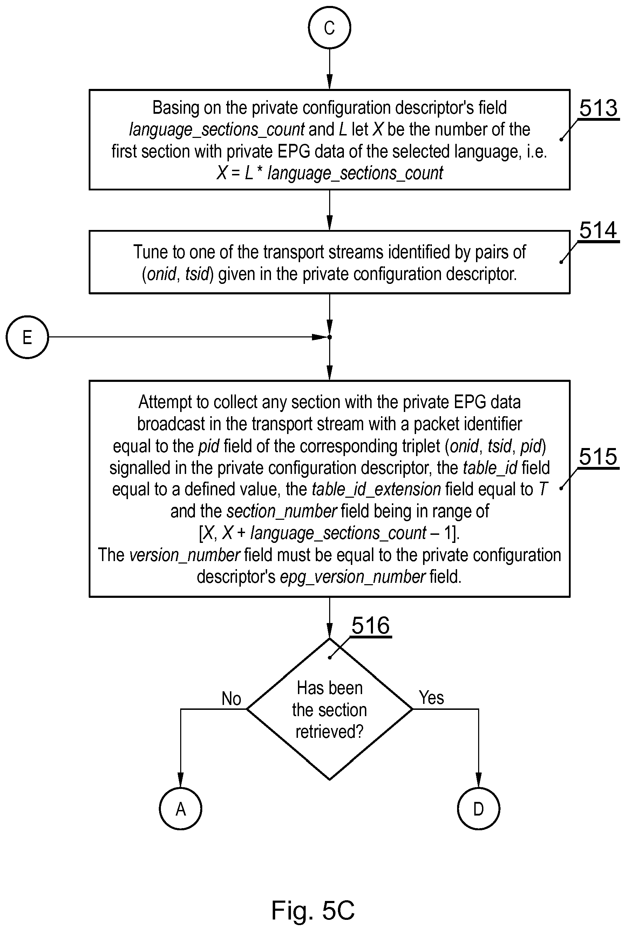

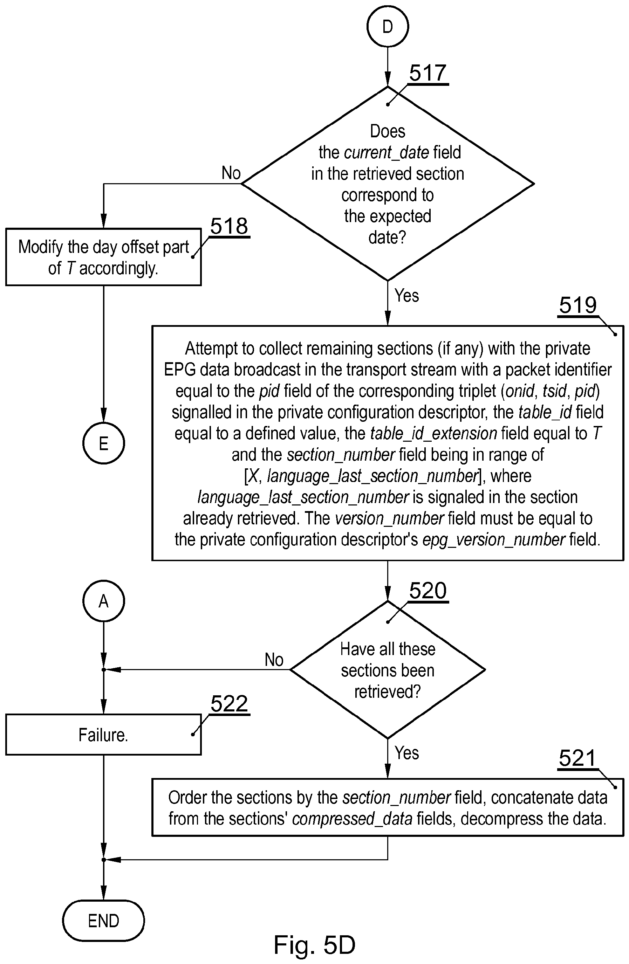

A structure of a section with private EPG data is shown in Fig. 4 and a method for retrieving such a section for a given service, day and language is presented in Figs. 5A-5D.

The SI and MPEG-2 PSI tables shall be segmented into one or more sections before being inserted into TS packets.

The meaning of respective fields of the EPG private section 400: *table_id, section_syntax_indicator, section_length, version_number, current_next_indicator, section_number, last_section_number* and *CRC_32* is the same as for standard DVB sections according to the EN 300 468 (see for example chapter "Use of table sections"). It is worth noting that the table_id field's value must be in range of 0x80..0xFE. The remaining fields (shown in bold in Fig. 4) are as follows:
- **table_id_extension**: A 16-bit value specifying the service number, the day offset (negative or positive for a past or today/future day) and optionally a day's range as specified by the proprietary EPG configuration descriptor 300 (*tid_ext_service_number_mask, tid_ext_direction_mask, tid_ext_day_offset_mask, tid_ext_day_range_mask* fields);
- **language_last_section_number**: An 8-bit value specifying the last section number for the language within the section (for the given *table_id_extension*). For example, if the private EPG sections are broadcast for 2 languages and the proprietary EPG configuration descriptor's 300 *language_sections_count* field is equal to 8, the second language may occupy sections in range of 8..15. However, if it is enough to accommodate the second language date for the given language and *table_id_extension* in 3 sections, the actual range is 8..11 and *language_last_section_number* is set to 11. Thanks to this field there is no need to broadcast sections with no event data (i.e. with the *compressed_data* field of zero size) in range of 12..15 for the said example;
- **current_date**: A 16-bit value comprising the date in the MJD format (Modified Julian Date) for which the EPG information in the *compressed_data* field is valid. Purpose of this field is ensuring that the included EPG information refers to the same date as indicated by the *table_id_extension* field, as it may happen that the actual date has advanced while the EPG data is still broadcast for the previous day. Thanks to this field the EPG module 215 may still correctly retrieve sections for the expected day offset, for example by modifying the demultiplexer filter for the *table_id_extension* field so that it points to the next day;
- **compressed_data**: this field include up to 4081 bytes of compressed data. The retrieved data is decompressed when all sections with the same *table_id_extension* for a given language have been collected. Preferably, the decompressed data is a JSON text with EPG events for the service and time range addressed by the *table_id_extension* field's value and a given language. A brief example of such a text is shown below:

   ```
       [{
         "id": 1,
         "startTime": 1546115126,
         "duration": 3600,
         "name": "Event",
           "description": "A very long description of this
      event",
         "parentalRating": [{
            "country": "POL",
            "age": 3
         }],
         "poster": "http://...", ... }, ...
       ]
```

However, the standard binary descriptor-based approach for event metadata may be also applied. In such a case standard EIT descriptors as well as new proprietary ones are allowed.

All sections of a table may be downloaded based on table identifier, section number, the last section number and the language last section number - for a given table_id_extension.

The meanings of individual properties are self-explaining and serve as an example only. For example, "id" serves for a unique event id in the context of a service, "startTime" is the time when the event commences (since the Unix Epoch, UTC) "name" is the event title and so on. The JSON-based data is the directly processed by the EPG module 215 and may be also passed over to the GUI 214 for direct handling. Such an approach is particularly useful for middlewares and GUIs based partially on entirely on JavaScript or TypeScript engines. In an embodiment a middleware may delegate processing EPG events in the JSON format to a TypeScript module running within the node.js environment. In another embodiment, the GUI may be application coded in JavaScript or TypeScript.

The method for retrieving a section for a given service, day and language, shown in Figs. 5A-5D, starts with step 501 where it is assumed that the proprietary EPG configuration descriptor 300, signaled in NIT, has been collected and processed in order to be kept in a manner enabling access to individual fields. E.g., a service number is stored in a binary search tree (BST) with references another BST with duplicated service numbers, if any. Next, at step 502 a set of input parameters is accepted for which sections 400 with private EPG events are requested:
- *S* - the service number;
- *O* - the day offset, where a value of zero means "today", a negative value a day in the past since "today", a value of 1 or more - a day in the future since "today";
- *R* - an optional value specifying the day range;
- *L* - the language index; *L* is in range of [0, *languages_count*-1] and matches the *ISO_639_language_code* field at a given index in the proprietary EPG configuration descriptor.

Then, at step 503 a 16 bit variable *T* is set to zero. At step 504 it is checked whether the service number S exists in the NIT's loop with the *service_number* field. If it does, the *S* is assigned to a variable *N* at step 505. If the result of the check at step 504 is negative, the method checks, at step 506, if the service number S exists in the NIT's loop with the *duplicated_service_number* field. If it does, at step 507 *N* is assigned with the value of the *service_number* field in the loop where *S* equal to the *duplicated_service_number* field was found, otherwise at step 522 a failure is reported as there are not any private EPG events for the *S* (neither as the "main" service nor as a duplicated one) and the method ends.

From steps 505 or 507 the method advances to step 508, where the value of *N* is assigned to T's bits indicated by the *tid_ext_service_number_mask* field of the proprietary EPG configuration descriptor. Next, at step 509, a 1 bit variable *D* is set to 1 if the day offset *O* is negative or set to 0 if it is equal to or greater than zero. Then, the appropriate bit of T - basing on the private configuration descriptor's *tid_ext_direction_mask* field - is set to *D*. It is worth noting that in some embodiments, events for today/future days may be broadcast only. In such a case, the value of the *tid_ext_direction_mask* field is equal to zero and *D* does not alter *T.*

At step 510, there is assigned an absolute value of *O* to a variable A and - basing on the private configuration descriptor's field *tid_ext_day_offset_mask* - *A* is assigned to appropriate bits of *T*. Then, the method jumps to step 511 where it is checked if the optional *R* parameter is provided and the NIT descriptor's *tid_ext_day_period_mask* is valid. If the result of the check is negative, the method advances directly to step 513. Otherwise at step 512 appropriate bits of *T* are assigned with *R* and then step 513 is reached, where a value of the variable *X* is set to the value of input parameter *L* multiplied by the value of the NIT descriptor's *language_sections_count* field. The *X* is equal to the number of the first section of the proprietary EPG data for the input parameters S, O, R and L.

Subsequently, at step 514, the STB tunes to one of the transport streams with the proprietary EPG sections 400, as signaled in the NIT private configuration descriptor's *onid* and *tsid* fields. Then, at step 515 an attempt is made to retrieve any section with the private EPG data broadcast in the transport stream with a packet identifier equal to the *pid* field of the corresponding triplet (*onid*, *tsid*, *pid*) signalled in the NIT private configuration descriptor, the *table_id* field equal to a defined value, *table_id_extension* field equal to *T* and the *section_number* field being in range of[*X*, *X* + *language_sections_count* - 1]. The version_number field must be equal to the private configuration descriptor's epg_version_number field. Next, at step 516, it is checked whether the requested section has been retrieved. If it has not, the methods jumps to step 522, otherwise at step 517 it is checked if the value of the collected section's *current_date* is equal to the expected value. This check is needed, as it may happen that the proprietary EPG sections 400 have not been updated for one day, for example. This would entail that the day offset equal to zero does not refer to events for "today", but for "yesterday". In such a case the day offset part of *T* must be modified accordingly as it is done in next step 518, when the result of the check is negative. From step 518 the method returns to step 515.

Otherwise, if the result is positive, step 519 is reached, where an attempt to collect remaining sections (if any) with the private EPG data broadcast in the transport stream with a packet identifier equal to the *pid* field of the corresponding triplet (*onid*, *tsid*, *pid*) signaled in the NIT private configuration descriptor, the *table_id* field equal to a defined value, the *table_id_extension* field equal to *T* and the *section_number* field being in range of [*X*, *language_last_section_number*], where *language_last_section_number* is signaled in the section caught at step 515. Again, the version_number field must be equal to the private configuration descriptor's epg_version_number field.

Next, at step 520 a check is made if all these sections have been retrieved. If they have not, the method jumps to step 522, otherwise at step 521 the collected sections are ordered by the *section_number* field, contents of the *compressed_data* fields are merged and the data is decompressed. The output JSON text data is ready for further processing by the middleware's EPG module 215 or GUI 214.

In an embodiment, the STB's EPG module may retrieve all private EPG sections 400 for a given language in a single loop. This is especially a preferred way for STBs with enough amount of memory and/or STBs that may not be uninterruptedly tuned to a transport stream with the private EPG data, for example because of limited hardware resources such as tuners, demodulators and/or demultiplexers.

The length (timewise) of the carousel is configurable at the head-end's side by specifying repetition intervals of individual sections. For instance, the carousel's length may be set to 30 seconds, regardless of the repetition rates of individual sections. For the sake of example, it may be assumed that repetition rates of sections containing the private EPG information for individual days are 2 seconds for today's events, 10 seconds for yesterday's and tomorrow's events and 30 seconds for events for remaining days (in the past or in the future). It is assumed that there are approximately 20 events for a service and a day.

Each event in the JSON format occupies 3 kB, where 2 kB are used by the event's description and the remaining 1 kB by the event's other metadata, resulting in 60 kB of the text data for a service/day. Since the data is compressed with ration of 15%, the expected typical size of events for the [service, day] pair is 9 kB. This means that a private EPG table for a given language typically comprises 2-3 sections. Assuming there are 200 services with the EPG data, a bitrate is equal to 2.76 MB/s (about 22 Mb/s), meaning all data may be collected in 30 seconds.

In another embodiment, the STB's EPG module may prefer to collect events for a particular service and time period. An example include filling up the EPG grid rapidly with all events for the current day. Because the repetition rate for today is high (in this example all such events are repeated in 2 seconds), the EPG data is actually available in a very short time, particularly comparing to EPG data broadcast in EIT sections.

It is worth noting that some STBs may retrieve all private EPG sections 400 for a given language and keep them in a cache in their original form, especially originally compressed. Then, whenever EPG events for a given service and day are needed, for example to display them by the GUI, the section already kept in the cache is used, i.e. decompressed and processed. When the processed data is not needed, it may be discarded, however the cache remains unchanged until a new version of the private EPG data 400 is available.

The EPG data broadcast by the private sections contains JSON-encoded EPG events. Such an approach enables variety of state-of-the-art software modules, including the GUI, for direct processing the EPG data being in JSON format. Since EPG information is always compressed this means typically 5 more data is broadcast at the same time (at the same bitrate) comparing to standard EITs, even if only a single language is used.

The present invention enables to retrieve EPG events from a single source for a plurality of services (channels) managed by various operators or content providers. It is intended that, because of the additional information on covered services in the private descriptor (300), the EPG covers a plurality, if not all, available channels. An EPG database may be aggregated, by an operator, and broadcast as a set, in particular a complete set.

This lets avoid merging events (with possible conflict resolutions) which would be retrieved, for example, from EIT sections broadcast on various transport streams controlled by these aforementioned operators.

Furthermore, the proprietary EPG events may be in the past, for instance letting the GUI display a past event and play it from a catchup head-end without any need to download the past EPG from another source as an IP past EPG head-end and hence overcomplicate the STB's EPG module. Therefore, the invention provides a useful, concrete and tangible result.

Also, the private EPG events have the same data model, i.e. metadata associated with events, what - again - simplifies processing the EPG events and on the other hand enables to introduce new, non-standard metadata as an event's poster or a link to a trailer. The private EPG data is broadcast at dynamic bitrate, different for particular days or time ranges, what allows to catch EPG events, for example, for an entire day (as "today") faster and for a plurality of services, comparing to EPG available in standard EIT sections. Furthermore, the private EPG data for services with the same content in various quality as SD, HD, 4K is broadcast only once, what along with obligatory EPG data compression and retrieving EPG data only in a desired language(s) helps to manage allocations of the STB's scarce resources as memory or CPU time.

The configuration of the private EPG sections is signaled through a single private descriptor broadcast in a NIT which may be retrieved when the STBs is powered on, for example by tuning to the home transport stream. Such an approach enables exposing the private EPG data by means of a single table type and hence - again - keep the process of retrieving private EPG events simple. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for electronic program guide data delivery may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for electronic program guide data delivery in a broadcast only system, the method comprising:
• creating one or more private descriptors (300) in a Network Information Table (NIT), according to Program-specific information metadata as defined by ISO/IEC 13818-1, said one or more private descriptors (300) collectively comprising:
∘ a descriptor_tag, which identifies the descriptor;
∘ a descriptor_length specifying the total number of bytes occupied by the descriptor;
∘ an epg_version_number field;
∘ a tid_ext_service_number_mask specifying, which bits of the private EPG section's table_id_extension field comprise a service number;
∘ a tid_ext_direction_mask specifying, which bit of a private EPG section's table_id_extension field comprises a direction of days;
∘ a tid_ext_day_offset_mask specifying which bits of a private EPG section's table_id_extension field comprise a day offset allowing for addressing sections for a given day being in the past, today or future;
∘ a tid_ext_day_range_mask specifying, which bits of a private EPG section's table_id_extension field comprise a day range indicating for which part of a single day the section refers to;
∘ a language_sections_count specifying a maximum number of private EPG sections (400) within the same value of the table_id_extension field for a given language;
∘ a languages_count specifying a number of languages, for which the private EPG data is broadcast;
∘ a services_count specifying the number of services for which private EPG sections are broadcast;
∘ a transports_count specifying a number of transport streams, in which private EPG sections (400) are available;
• creating a plurality of EPG data sections (400), extending sections according to the EN 300 468, each section comprising:
∘ a table_id_extension specifying the service number, the day offset and optionally a day's range as specified by the private descriptor's (300) mask fields:
▪ tid_ext_service_number_mask;
▪ tid_ext_direction_mask'
▪ tid_ext_day_offset_mask and
▪ tid_ext_day_range_mask;
∘ a language_last_section_number specifying the last section number for the language within the section;
∘ a current_date field indicating the current date;
∘ compressed_data comprising bytes of data to be transmitted;
• for each channel, broadcasting said private descriptor (300) and corresponding private EPG sections (400) carrying EPG-related data for receivers.

2. The method according to claim 1 wherein the private descriptor (300) further comprises a field of ISO_639_language_code identifying the language of the private EPG data (400).

3. The method according to claim 1 wherein the private descriptor (300) further comprises a service_number, only if services_count is greater than zero, specifying the number of a service, for which private EPG sections (400) are broadcast.

4. The method according to claim 1 wherein the private descriptor (300) further comprises a duplicated_services_count, only if services_count is greater than zero, specifying a number of duplicated services in context of the private EPG data (400) for a service with a given number.

5. The method according to claim 1 wherein the private descriptor (300) further comprises a duplicated_service_number, only if duplicated_services_count is greater than zero, specifying the number of a duplicated service, for which private EPG sections (400) are the same as for the "main" service referred by the service_number field.

6. The method according to claim 1 wherein the private descriptor (300) further comprises, only if transports_count is greater than zero:
∘ an onid specifying an Original Network Id;
∘ a tsid specifying a Transport Stream Id;
∘ a pid specifying a transport stream's Packet Identifier.

7. The method according to claim 1 wherein EPG data sections (400) are broadcast at dynamic bitrate, different for particular days or time ranges said data refer to.

8. A computer program comprising program code means for performing all the steps of the computer-implemented method according to claim 1 when said program is run on a computer.

9. A computer readable medium storing computer-executable instructions performing all the steps of the computer-implemented method according to claim 1 when executed on a computer.

10. A broadcast signal comprising electronic program guide data and being **characterized by** being generated by the method according to claim 1.
